# EUROPEAN PATENT SPECIFICATION

(11) **EP 1 247 415 B1**
(45) Date of publication and mention of the grant of the patent: **28.02.2007**
(21) Application number: 01901231.9
(22) Date of filing: 10.01.2001
(51) Int. Cl.: H04Q 7/34

(54) **ESTABLISHMENT OF A CONTROL CHANNEL**
AUFBAU EINES STEUERUNGSKANALS
ETABLISSEMENT D'UN CANAL DE COMMANDE

(30) Priority: 11.01.2000 FI 20000047
(43) Date of publication of application: 09.10.2002
(73) Proprietor: Nokia Corporation, 02150 Espoo (FI)
(72) Inventor: TARVAINEN, Tomi, FIN-02730 Espoo (FI)
(74) Representative: Kupiainen, Juhani Kalervo
(86) International application number: PCT/FI2001/000018
(87) International publication number: WO 2001/052570

(56) References cited:
- WO-A1-99/22541
- WO-A1-99/43174

## Description

### Field of the invention

This invention relates to telecommunication network planning and network control as well as to network installation procedures. In particular the invention relates to the establishment of a remote control connection to a network element in a communications network.

### Technical background

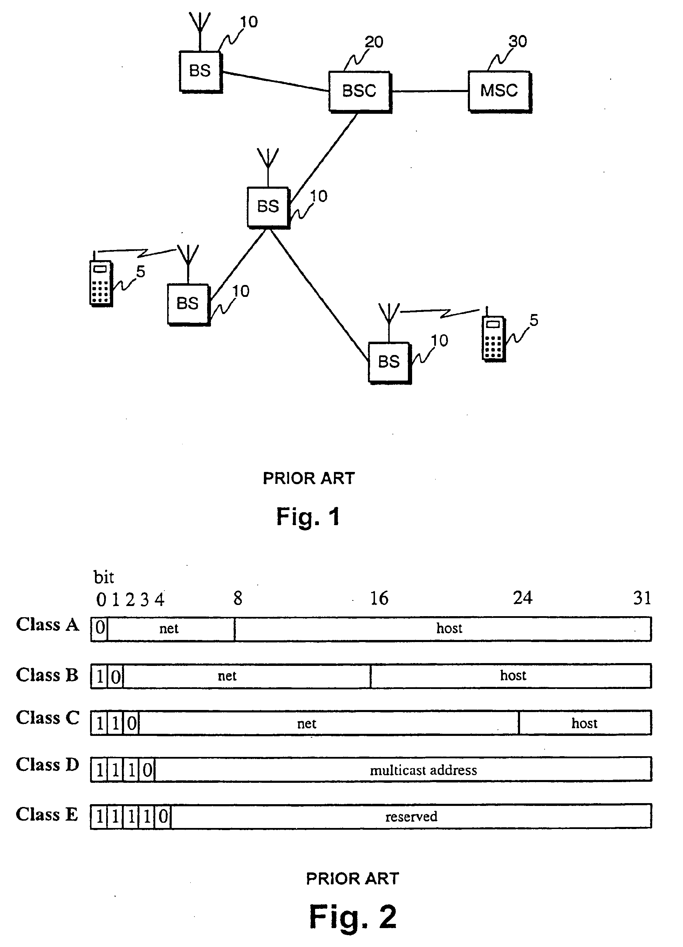

A base station network in a mobile communication system comprises primarily base stations (BS) and base station controllers (BSC). The base station controller controls the operation of the base stations. The BSC is connected to a mobile switching center (MSC). The base stations provide connections to mobile phones through the air interface. The base stations are connected to the BSC through a radio link, copper cable or optical cable. The tasks of the BSC include controlling the transmission power of mobile stations and carrying out handovers for mobile stations. The base station controllers are connected to a mobile switching center which handles the mobile telephone traffic in its geographical area. Its tasks include routing of calls, call management and termination of calls. Furthermore, the mobile switching center is connected to registers containing user information such as e.g. the home location register HLR and visitor location register VLR and the network management system NMS. Fig. 1 shows a block diagram of a typical base station network architecture. The base station network comprises base stations 10 and base station controllers 20. The base station controller 20 is connected to a mobile switching center MSC 30 in the mobile communication network. In addition, Fig. 1 shows mobile stations 5 connected to the base station network.

As the Internet gains more popularity, the technology involved, in particular the technology associated with IP (Internet Protocol) networks, has become cheaper and has been introduced in many fields of application. IP network technology is already being used in mobile communication systems as well, especially in setting up base station networks. In an IP network each device in the network owns a unique address within the network. If a device has got several interfacing ports to the network, each port is given an IP address of its own. There are two versions of the IP protocol. Version 4 of the IP protocol (IPv4) is specified in the document RFC 791. Version 6 of the IP protocol (IPv6) is specified in the document RFC 1883.

An IPv4 address consists of a string of 32 bits. Fig. 2 illustrates the structure of the IPv4 addresses. IPv4 addresses are currently divided into five classes: A, B, C, D and E. The most significant bits in the address indicate the class of the address. A, B and C class IP addresses are divided into two parts: the net part and the host part. The net part identifies the network to which the host is connected, and the host part identifies the host's connection port to the network. By reserving more bits to the net part and fewer bits to the host part it is possible to assign addresses to an overall network architecture comprising a large number of discrete networks. Such a case of course involves the restriction that a discrete network cannot contain very many recipients. Conversely, if we have a few large networks with a large number of users in them, then it is best to choose a net part comprising fewer bits and a host part comprising many bits. A class D address comprises a so-called multicast address, and class E is reserved for future use. IP addresses are unique, so granting and assigning IP addresses must be supervised so that one and the same address not be given more than once.

A new device attached to an IP network needs an IP address of its own. A popular way to implement the allocation of an IP address to a new device attached to the network is to have the new device request the IP address from a DHCP (Dynamic Host Configuration Protocol) server or BOOTP (Bootstrap Protocol) server either in the same or in a different network. The DHCP server keeps track, in a centralized manner, of the IP addresses required by a network in the geographical area assigned to it. The DHCP or BOOTP server allocates the new device a free IP address and sends information about it to the new device. As soon as the new device has got an IP address, it is able to communicate in the network. Another alternative, somewhat more complicated though, is to program an IP address for the new device already before it is delivered to its fmal destination, but this calls for very careful network planning and maintenance.

In addition to the IP address a new device connected to an IP network also needs a control channel through which the new device can be controlled and monitored when necessary. Advantageously the device is assigned a so-called remote control channel through which the device can be controlled and monitored remotely. Conventionally the control connection has been set up in such a manner that the installer of the device has manually sought for a free control connection. This means that the installer has by means of PC or the like searched for free control connections and when he has found at least one, he feeds the control channel information to the new device, after which the device may start using the control channel. The problem with this solution is that the manual search for the control channel prolongs the installation time of the new device. Furthermore, manual installation makes the whole system subject to human errors, e.g. if the installer through an oversight gives the new device a control channel which is already being used by another device.

An object of the invention is to provide an installation method for the elements of a base station network, which method eliminates the disadvantages mentioned above. Another object of the invention is to provide an installation method for the elements of a base station network, which method makes it easier to install a base station network based on an IP communication network.

The objects of the invention are achieved by automating the establishment of a remote control connection and by arranging, after the establishment of the remote control connection, for a method by means of which other network elements can be informed about the existence of the remote control channel for a certain network element.

The method according to the invention for establishing a remote control connection for a new network element in an IP based communications network is characterized in that
- a free time slot is searched for in the connections between the new network element and other network elements of said IP based communications network around it, and
- when a free time slot is found, the IP address information of the new network element is changed to indicate that a free time slot has been found for a remote control channel.

The IP based communications system according to the invention which comprises at least base stations BS, control elements and cross-connects, and in which each network element has an IP address of its own, is characterized in that when a new network element is added, the communications system is arranged so as to
- search for a free time slot in the connections between the new network element and others of said network elements around it and
- modify the IP address information of the new network element to indicate that a free time slot has been found for a remote control channel.

The network element according to the invention, which is connected to an IP based communications network and has an IP address of its own, is characterized in that it comprises
- a means for searching for a free time slot in its connections to other network elements of the IP based communications network around it and
- a means for modifying the IP address information of the network element to indicate that a free time slot has been found for a remote control channel.

Advantageous embodiments according to the invention are presented in the dependent claims. In the method according to the invention, when a network element has been installed, the installed network element is arranged so that it requests a control channel. When the control channel has been established, the network element is arranged so that it modifies its IP address information such that the other network elements in the same network detect the existence of the control channel and are able to use it, if necessary. Means are arranged in the communications system and network to carry out the functions of the method.

### Brief description of the drawings

The invention is below described more closely with reference to the attached drawings in which
- Fig. 1: shows an example of a typical base station network,
- Fig. 2: illustrates the IP address structure,
- Fig. 3: shows a second example of a base station network,
- Fig. 4: shows the IP address structure according to an advantageous embodiment of the invention,
- Fig. 5: shows the communications system according to the invention,
- Fig. 6: shows the network element according to the invention, and
- Fig. 7: shows a flow diagram of the method according to the invention.

Like elements in the drawings are denoted by like reference designators. Figs. 1 and 2 were described above in connection with the description of the prior art.

### Detailed description of advantageous embodiments of the invention

According to the invention, the installation and preparation for use of a new network element are carried out in an automated manner as far as possible. Here, the installation of a network element means especially that a new network element is provided with software comprising all the necessary data for starting the operation of the network element. When the data have been supplied, the network element can start communicating with the other network elements in the network, because in connection with the data input the net- work element was given an IP address which had been compiled for it e.g. during the network planning stage.

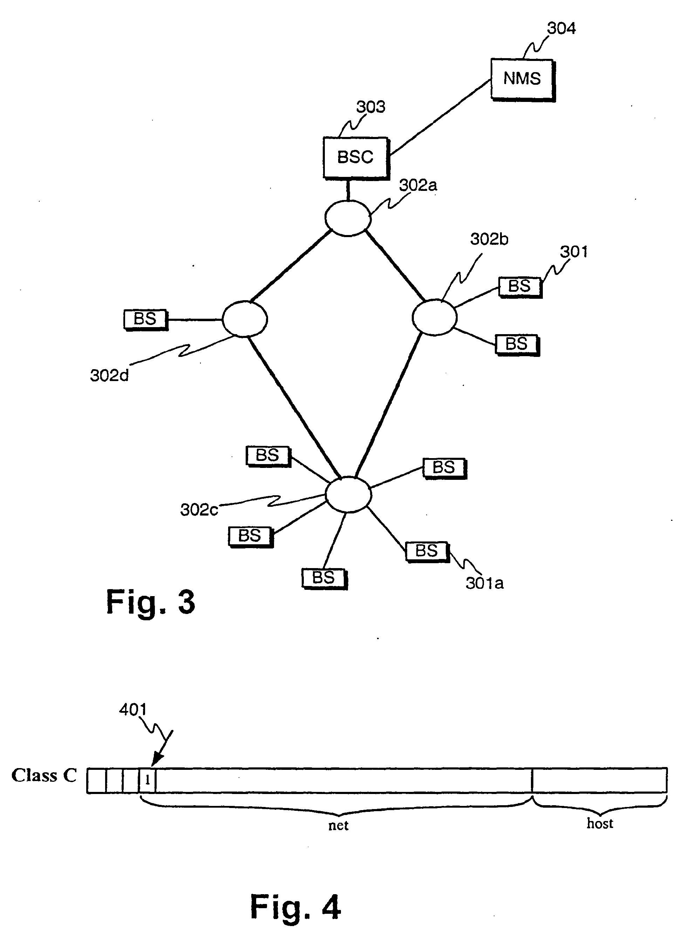

Let us next consider the establishment of a control connection for a network element. In this exemplary embodiment the network comprises at least base stations BS, cross-connects and control elements such as base station controllers BSC. The said control elements such as base station controllers BSC at least control the base stations BS of the same area. The base station controllers BSC and base stations controlled by them are interconnected through communications connections which constitute a so-called transmission system in the base station network. Ordinarily the base stations BS and base station controllers BSC are connected to the transmission system through cross-connects so that the system may look like the one depicted in Fig. 3. In Fig. 3 a base station controller BSC 303 is connected to a network management system NMS 304 which is here not examined in more detail. The base station controller BSC 303 comprises ports through which the base station controller 303 can be connected to the transmission system. This exemplary embodiment shows a network arrangement with attachment to one port only. A cross-connect 302a is connected to the port of the base station controller BSC 303. This cross-connect 302a is connected in this exemplary embodiment to other cross-connects 302b...d. Further, to these cross-connects 302b...d there are connected at least base stations BS 301. Each cross-connect 302a...d shown is at all times searching for a so-called gateway channel. A gateway channel refers to a route via which a connection can be established from the base station controller BSC to an individual cross-connect 302a...d. When a network element, which in this case means a cross-connect 302a...d, finds a free time slot in the access channel of the base station controller BSC 303, the network element in question asks for the identifier of the control channel found and stores it. After that the network element modifies its own address in accordance with the invention in such a manner that it can inform the other network elements connected to it about the finding of the gateway channel. The said other network elements, in this exemplary case e.g. cross-connects 302a...d, register the gateway channel found and store it in their files or the like. It is obvious to a person skilled in the art that the arrangement described here brings the advantage that, unlike in solutions according to the prior art, the network elements need not store information about all the possible routes to the base station controller BSC 303, but it suffices that the network elements store information about the network elements that constitute a gateway channel to the network element in question. With this kind of an arrangement the manufacturing costs of network elements can be reduced because they need less storage capacity.

Similar action is possible when connect- ing a new base station BS 301 to a network node such as a cross-connect 302a...d. Let us consider by way of example a situation depicted in Fig. 3 where a new base station BS 301a is being added to the network. In the first step, installation files are installed in the base station BS 301a so that the network element is ready to be taken into use. The said installation files comprise e.g. the IP address of the network element in question, geographical location data of the network element, and technical information concerning the network element in question. When the new base station BS 301a has been connected, it automatically starts polling for a remote control channel. Polling means here that the base station begins to search for a free time slot in the connections to the neighbouring cross-connects 302a...d or other possible network elements, which time slot is to be used by the new base station BS 301a to establish the remote control channel. When a free time slot is found within a connection to a neighbouring network element, the new network element, i.e. in this case base station BS 301a, changes the value of a predetermined bit in its IP address to indicate that it has found a remote control channel connection to a cross-connect 302a... d or the like. When the remote control channel has been established between the new base station BS 301a and the cross-connect 302a...d or the like, the network element in question can be controlled and monitored and its files can be updated by the base station controller BSC 303. It is obvious to a person skilled in the art that the cross-connects 302a... d utilize the gateway channel mentioned above in order to establish a remote control channel to the new base station BS 301 a.

Let us next consider how a network element changes its IP address when the network element has found a remote control channel for itself. In accordance with the invention, the new network element may indicate the finding of the remote control channel e.g. in conjunction with the sending of IP address information. One possible way of indicating the finding of the remote control channel is represented by arrow 401 in Fig. 4. Fig. 4 depicts an IP address the structure of which applies the inventional idea according to the invention and which address belongs to the class C mentioned above. According to the invention, at least one bit in the IP address is selected to indicate the finding of the remote control channel. In this exemplary embodiment the bit to be modified is the first bit in the net part of the IP address. The rest of the bits in the net part can in this exemplary embodiment be used in the normal manner to identify subnetworks. It is obvious to one skilled in the art that the first three bits in class C IP addresses are reserved to indicate in a known manner the fact that the address belongs to class C. Correspondingly, the first, or the most significant bit in the net part of IP addresses in other classes, too, can be used to indicate the existence of the remote control channel. It is furthermore obvious to a person skilled in the art that some other bit in the IP address, especially in the net part thereof, may be chosen to indicate the finding of the control channel. Such a bit could be e.g. the last bit in the net part What is essential is that all network elements in the network know which bit is used to indicate the finding of a remote control channel so that elements in the network be able to utilize the solution according to the invention.

The arrangement according to the invention brings the advantage that in a fault situation in which a remote control channel connection to the base station controller BSC 303 is disconnected, a new remote control channel can be established automatically without the work input of a service person. Let us for example consider a situation where the gateway connection between the cross-connects 302b and 302c is broken, whereby the bit in the IP address of the cross-connect which indicates the existence of a gateway connection is changed to indicate the absence of a gateway connection. The cross-connect 302c starts then automatically searching for a new gateway connection through the cross-connect 302d. If a free time slot is found in the connection in question for the remote control channel of the cross-connect 302c, it is reserved and the value of the predetermined bit in the address is again changed to indicate the finding of the new remote control channel. After that, the other network elements update their routing tables according to the new IP addresses.

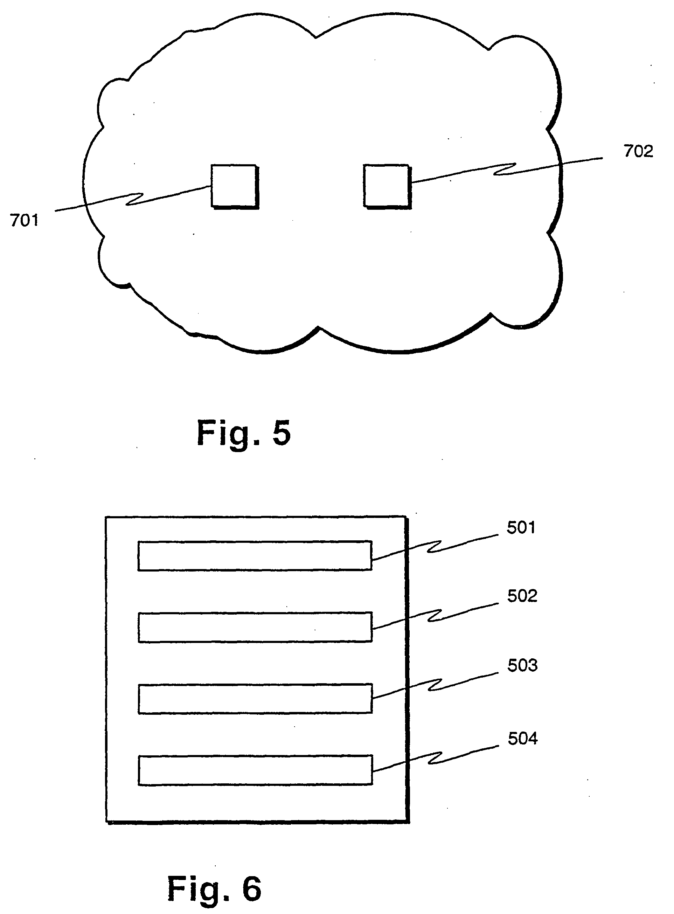

The communications system according to the invention shown in Fig. 5 comprises at least base stations BS, control elements and cross-connects. Each network element is arranged to have an IP address and remote control channel of its own. The communications system according to the invention comprises a first means 701 for searching for a free time slot in connections between network elements when a new network element is connected to the said communications network. The communications system further comprises a second means 702 for altering IP address information to indicate the finding of a free time slot for a remote control channel. The said means are advantageously realized in software, for example. Advantageously the said communications network is a private IP network. It is obvious to a person skilled in the art that the communications system also comprises the other means essential to the network operation, which are not described here in detail.

Fig. 6 shows a network element according to the invention, such as e.g. a base station BS 301, which advantageously comprises a first means 501 where installation files can be stored. In addition, the network element comprises a second means 502 through which the network element can search for a free time slot in its connections to other network elements in order to establish a base station connection. The network element further comprises a means 503 through which it can change its IP address in a predetermined manner when a free time slot has been found. A means 504 is arranged in the network element where the network element can store information about the IP addresses required for the remote control channel. The said means may be realized e.g. in a microprocessor which runs software that carries out the functions of the means mentioned above. In addition, the functions of the said means can be realized using memory circuits that have enough storage space. It is obvious to a person skilled in the art that in addition to the means mentioned above the network element comprises means for implementing its communications connections. One such means is e.g. a transceiver unit. Such means are not specified here more closely, for they are not essential to the present invention. It is obvious to a person skilled in the art that the network element described above is advantageously a network element in a private IP network where each individual node advantageously constitutes a subnetwork of its own.

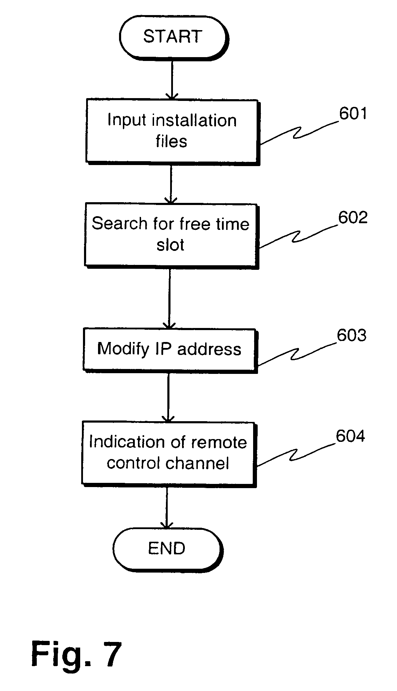

Fig. 7 shows the steps of the method according to the invention. In the first step the installer feeds into the network element the installation files 601 by means of which an individual network element can be made to carry out its functions. In the second step a network element which can communicate with other network elements starts searching for a free time slot in its connections 602. When a free time slot is found in a connection the network element changes the value of a predetermined bit in its IP address to indicate the finding of a control channel 603. When the address has been changed, the network element informs the other elements in the network about the finding of a remote control channel automatically in connection with its address information 604.

The method according to the invention can be used both in networks based on the IPv4 and in networks based on the IPv6 protocol. Moreover, the method according to the invention for installing an element in a base station network can be applied in the GSM (Global System for Mobile communications), UMTS (Universal Mobile Telecommunication System) and other digital mobile communication systems in which an IP network can be used as a communications network of the base station network.

The name of a given functional unit, such as base station controller, is often different in different cellular network systems. For example, in the UMTS the functional unit equivalent to the base station controller (BSC) is the radio network controller (RNC). Therefore, the terminology in this application as regards network elements is, for reasons of clarity, in accordance with the GSM system, but the invention is not limited solely to the GSM system.

In view of the foregoing it is obvious to a person skilled in the art that various modifications can be made without departing from the scope of the invention. Although an advantageous embodiment of the invention was described in detail, it is obvious that various modifications to and variations on the embodiment are possible, which modifications and variations are in accordance with the scope of the invention.

## Claims

1. A method for establishing a remote control connection for a new network element (301, 302a-d, 303) in an IP based communications network, **characterized in that**
- a free time slot is searched (602) for in the connections between the new network element and other network elements of said IP based communications network around it, and
- when a free time slot is found, the lP address information (401) of the new network element is changed (603) to indicate (604) that a free time slot has been found for a remote control channel.

2. A method according to claim 1, wherein the lP address information of the ) network element is changed for at least one bit (401).

3. A method according to claim 2, wherein the said one bit (401) is a bit in the net part of the lP address.

4. A method according to claim 3, wherein the said bit (401) in the net part is the most significant bit in the net part.

5. A method according to claim 1, wherein only information about network elements (301, 302a-d, 303) constituting a gateway channel to the new network element (301, 302a-d, 303) is stored in said network elements.

6. A method according to claim 1, wherein the information about the remote control channel is conveyed to the other network elements (301, 302a-d, 303) together with IP address information (401).

7. An IP based communications system comprising at least base stations BS (301), control elements (303) and cross-connects (302a-d), and in which each of said network elements has an IP address of its own, **characterized in that** when a new network element (301, 302a-d, 303) is added, the communications system is arranged to
- search (602) for a free time slot in the connections between the new network element and others of said network elements around it, and
- modify (603) the lP address information (401) of the new network element to indicate (604) that a free time slot has been found for a remote control channel.

8. A communications system according to claim 7, wherein the said communications system is a private IP network.

9. A network element (301, 302a-d, 303) connected to an IP based communications network and having an IP address of its own, **characterized in that** the network element comprises
- means (502) for searching for a free time slot in its connections to other network elements of the IP based communications network around it, and
- means (503) for modifying the IP address information (401) of the network element to indicate (604) that a free time slot has been found for a remote control channel.

10. A network element according to claim 9, wherein it is a base station BS (301).

11. A network element according to claim 9, wherein it is a cross-connect (302a-d).

## Patentansprüche

1. Verfahren zum Einrichten einer Fernsteuerungsverbindung für ein neues Netzwerkelement (301, 302a-d, 303) in einem IP-basierten Kommunikationsnetzwerk, **dadurch gekennzeichnet, dass**
- nach einem freien Zeitfenster gesucht wird (602) in den Verbindungen zwischen dem neuen Netzwerkelement und anderen Netzwerkelementen des IP-basierten Kommunikationsnetzwerks um es herum; und,
- wenn ein freies Zeitfenster gefunden wird, wird die IP-Adressinformation (401) des neuen Netzwerkelements verändert (603), um anzuzeigen (604), dass ein freies Zeitfenster für einen Fernsteuerungskanal gefunden worden ist.

2. Verfahren nach Anspruch 1, wobei die IP-Adressinformation des neuen Netzwerkelements um wenigstens ein Bit (401) verändert wird.

3. Verfahren nach Anspruch 2, wobei das eine Bit (401) ein Bit im Netzteil der IP-Adresse ist.

4. Verfahren nach Anspruch 3, wobei das Bit (401) im Netzteil das bedeutsamste Bit im Netzteil ist.

5. Verfahren nach Anspruch 1, wobei nur Information über Netzwerkelemente (301, 302a-d, 303), welche einen Gateway-Kanal zum neuen Netzwerkelement (301, 302a-d, 303) umfasst, in den Netzwerkelementen gespeichert wird.

6. Verfahren nach Anspruch 1, wobei die Information über den Fernsteuerungskanal auf die anderen Netzwerkelemente (301, 302a-d, 303) gemeinsam mit der IP-Adressinformation (401) übertragen wird.

7. IP-basiertes Kommunikationssystem, umfassend wenigstens Basisstationen BS (301), Steuerungselemente (303) und Kreuzvielfachverteiler (302a-d) und in welchem jedes der Netzwerkelemente eine eigene IP-Adresse aufweist, **dadurch gekennzeichnet, dass**, wenn ein neues Netzwerkelement (301, 302a-d, 303) hinzugefügt wird, das Kommunikationssystem angeordnet ist, um
- nach einem freien Zeitfenster in den Verbindungen zwischen dem neuen Netzwerkelement und anderen der Netzwerkelemente um es herum zu suchen (602), und
- die IP-Adressinformation (401) des neuen Netzwerkelements zu modifizieren (603), um anzuzeigen (604), dass ein freies zeitfenster für einen Fernsteuerungskanal gefunden worden ist.

8. Kommunikationssystem nach Anspruch 7, wobei das Kommunikationssystem ein privates IP-Netzwerk ist.

9. Netzwerkelement (301, 302a-d, 303), welches mit einem IP-basierten Kommunikationsnetzwerk verbunden ist und eine eigene IP-Adresse aufweist, **dadurch gekennzeichnet, dass** das Netzwerkelement umfasst:
- Mittel (502) zum Suchen nach einem freien Zeitfenster in seinen Verbindungen zu anderen Netzwerkelementen des IP-basierten Kommunikationsnetzwerks um es herum, und
- Mittel (503) zum Modifizieren der IP-Adressinformation (401) des Netzwerkelements, um anzuzeigen (604), dass ein freies Zeitfenster für einen Fernsteuerungskanal gefunden worden ist.

10. Netzwerkelement nach Anspruch 9, wobei es eine Basisstation BS (301) ist.

11. Netzwerkelement nach Anspruch 9, wobei es ein Kreuzvielfachverteiler (302a-d) ist.

## Revendications

1. Procédé d'établissement d'une connexion de contrôle à distance pour un nouvel élément de réseau (301, 302a-d, 303) dans un réseau de communications basé sur le protocole Internet IP, **caractérisé en ce que**
- une tranche de temps libre est recherchée (602) dans les connexions entre le nouvel élément de réseau et d'autres éléments de réseau dudit réseau de communications basé sur le protocole Internet IP autour de lui, et
- lorsqu'une tranche de temps libre est trouvée, les informations d'adresse IP (401) du nouvel élément de réseau sont modifiées (603) pour indiquer (604) qu'une tranche de temps libre a été trouvée pour un canal de contrôle à distance.

2. Procédé selon la revendication 1, dans lequel les informations d'adresse IP du nouvel élément de réseau sont modifiées pour au moins un bit (401).

3. Procédé selon la revendication 2, dans lequel ledit un bit (401) est un bit dans la partie de réseau de l'adresse IP.

4. Procédé selon la revendication 3, dans lequel ledit bit (401) dans la partie de réseau est le bit le plus significatif dans la partie de réseau.

5. Procédé selon la revendication 1, dans lequel seules des informations concernant des éléments de réseau (301, 302a-d, 303) constituant un canal de passerelle vers le nouvel élément de réseau (301, 302a-d, 303) sont mémorisées dans lesdits éléments de réseau.

6. Procédé selon la revendication 1, dans lequel les informations concernant le canal de contrôle à distance sont transportées vers les autres éléments de réseau (301, 302a-d, 303) avec des informations d'adresse IP (401).

7. Système de communications basé sur le protocole Internet IP comprenant au moins des stations de base BS (301), des éléments de contrôle (303) et des interconnexions (302a-d), et dans lequel chacun desdits éléments de réseau a sa propre adresse IP, **caractérisé en ce que**, lorsqu'un nouvel élément de réseau (301, 302a-d, 303) est ajouté, le système de communications est agencé pour
- rechercher (602) une tranche de temps libre dans les connexions entre le nouvel élément de réseau et d'autres desdits éléments de réseau autour de lui, et
- modifier (603) les informations d'adresse IP (401) du nouvel élément de réseau pour indiquer (604) qu'une tranche de temps libre a été trouvée pour un canal de contrôle à distance.

8. Système de communications selon la revendication 7, dans lequel ledit système de communication est un réseau IP privé.

9. Elément de réseau (301, 302a-d, 303) connecté à un réseau de communications basé sur le protocole Internet IP et ayant sa propre adresse IP, **caractérisé en ce que** l'élément de réseau comprend
- des moyens (502) pour rechercher une tranche de temps libre dans ses connexions à d'autres éléments de réseau du réseau de communications basé sur le protocole Internet IP autour de lui, et
- des moyens (503) pour modifier les informations d'adresse IP (401) de l'élément de réseau pour indiquer (604) qu'une tranche de temps libre a été trouvée pour un canal de contrôle à distance.

10. Elément de réseau selon la revendication 9, dans lequel il s'agit d'une station de base BS (301).

11. Elément de réseau selon la revendication 9, dans lequel il s'agit d'une interconnexion (302a-d).
